# EUROPÄISCHE PATENTSCHRIFT

(11) **EP 4 549 756 B1**
(45) Veröffentlichungstag und Bekanntmachung des Hinweises auf die Patenterteilung: **30.09.2026**
(21) Anmeldenummer: 24207630.5
(22) Anmeldetag: 18.10.2024
(51) Int. Cl.: F16B 7/04

(54) **STRUKTURANORDNUNG**
STRUCTURAL ASSEMBLY
ENSEMBLE STRUCTUREL

(30) Priorität: 01.11.2023 DE 102023130195
(43) Veröffentlichungstag der Anmeldung: 07.05.2025
(73) Patentinhaber: König + Neurath AG, 61184 Karben (DE)
(72) Erfinder: Müller-Schellhorn, Cornelius, 61137 Schöneck (DE); Rauch, Jürgen, 63477 Maintal (DE)
(74) Vertreter: Wolf & Wolf Patentanwaltsgesellschaft mbH

(56) Entgegenhaltungen:
- EP-A1- 0 059 463
- WO-A1-2009/050247
- DE-A1- 19 817 427
- DE-A1- 2 649 523
- GB-A- 2 566 707
- US-A- 4 101 231

## Beschreibung

Die Erfindung betrifft eine Strukturanordnung gemäß dem Oberbegriff des Patentanspruchs 1.

Eine Strukturanordnung der eingangs genannten Art ist aus dem Dokument DE 26 49 523 A1 bekannt.

Eine weitere Strukturanordnung ist aus dem Dokument DE 20 2022 100 629 U1 bekannt. Diese besteht aus einem ersten und einem zweiten Strukturelement, dort Aufnahmeanordnung und Profilanordnung genannt, und einer Verbindungseinrichtung, dort Verbindungsanordnung genannt, zum Verbinden der beiden Strukturelemente, wobei die Verbindungseinrichtung einen im ersten Strukturelement fixierten Korpus und einen formschlüssig mit einer Öffnung am zweiten Strukturelement zusammenwirkenden Riegel aufweist. Bei dieser Lösung müssen die beiden Strukturelemente, um sie fest miteinander zu verbinden, gegeneinander verdreht werden.

Der Erfindung liegt die Aufgabe zugrunde, eine Strukturanordnung der eingangs genannten Art zu verbessern. Insbesondere soll eine einfacher montierbare, aber gleichzeitig auch sehr stabile Strukturanordnung geschaffen werden.

Diese Aufgabe ist mit einer mehrdimensionalen Strukturanordnung der eingangs genannten Art durch die im Kennzeichen des Patentanspruchs 1 aufgeführten Merkmale gelöst.

Nach der Erfindung ist also vorgesehen, dass die Sicherungseinrichtung als Führung den Riegel teilweise umschließend ausgebildet ist.

Mit anderen Worten zeichnet sich die erfindungsgemäße Lösung somit dadurch aus, dass der Riegel nach dem Einbringen in die Öffnung in dieser fixierbar ausgebildet ist, so dass sich eine insoweit unlösbare Verbindung der beiden Strukturelemente ergibt. Erst nach entsprechendem Lösen der Sicherungseinrichtung kann der Riegel, der vorzugsweise mit einem Widerhaken versehen ausgebildet ist, aus der Öffnung herausgenommen bzw. herausgezogen werden.

Andere vorteilhafte Weiterbildungen der erfindungsgemäßen mehrdimensionalen Strukturanordnung ergeben sich aus den abhängigen Patentansprüchen.

Der Vollständigkeit halber wird noch auf die Dokumente US 4 101 231 A, EP 0 059 463 A1 und GB 2 566 707 A hingewiesen.

Die erfindungsgemäße Strukturanordnung einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: im Schnitt entlang der Linie A-A in Figur 3 die erfindungsgemäße Strukturanordnung;
- Figur 2: perspektivisch und teilweise transparent die Strukturanordnung gemäß Figur 1;
- Figur 3: in Seitenansicht und ebenfalls teilweise transparent die Strukturanordnung gemäß Figur 1 und 2;
- Figur 4: ein aus zwei Schalen gebildeter (im übrigen leerer) Korpus mit einer Anlagefläche für ein Strukturelement mit runder Querschnittsfläche (nicht extra dargestellt);
- Figur 5: ein (leerer) Korpus mit einer Anlagefläche für ein Strukturelement mit rechteckiger Querschnittsfläche (wie in den Figuren 1 bis 3);
- Figur 6: perspektivisch von unten die Sicherungseinrichtung mit zahnstangenartiger Verzahnung;
- Figur 7: perspektivisch von oben der Riegel mit Widerhaken und Mitnehmer;
- Figur 8: perspektivisch von unten das Stellelement mit zahnradartigen Verzahnung, Betätigungshebel und Drehachse;
- Figur 9: in Seitenansicht und teilweise geschnitten das erste Strukturelement mit Riegel und Sicherungsabschnitt;
- Figur 10: im Schnitt (entlang der Linie A-A in Figur 9) die Verbindungseinrichtung mit Riegel, Sicherungseinrichtung und Stellelement in einer ersten Stellung;
- Figur 11: die Verbindungseinrichtung gemäß Figur 10 in einer zweiten Stellung; und
- Figur 12: die Verbindungseinrichtung gemäß Figur 10 in einer dritten Stellung.

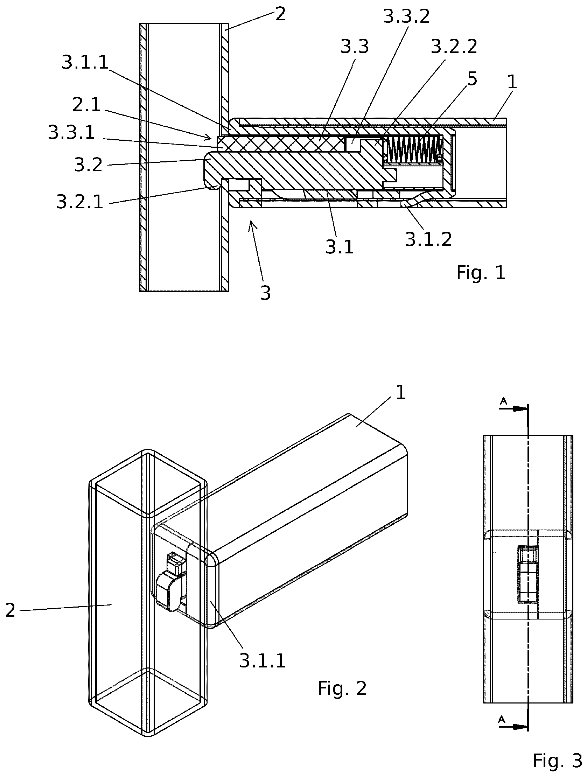

Die in den Figuren dargestellte Strukturanordnung, die insbesondere zur Ausbildung eines Regalsystems (insbesondere für Büromöbel) dient, besteht aus einem ersten und einem zweitem Strukturelement 1, 2 und einer Verbindungseinrichtung 3 zum Verbinden der beiden Strukturelemente 1, 2, wobei die Verbindungseinrichtung 3 einen im ersten Strukturelement 1 fixierten Korpus 3.1 und einen formschlüssig mit einer Öffnung 2.1 am zweiten Strukturelement 2 zusammenwirkenden Riegel 3.2 aufweist. Die Öffnung 2.1 weist dabei vorzugsweise, wie insbesondere aus Figur 3 ersichtlich, einen rechteckigen Öffnungsquerschnitt auf.

Wie insbesondere aus Figur 2 ersichtlich, ist bei alledem bevorzugt vorgesehen, dass das erste Strukturelement 1 einen rechteckigen, vorzugsweise quadratischen, Querschnitt aufweist. Außerdem ist ferner bevorzugt vorgesehen, dass das zweite Strukturelement 1 entweder (siehe wiederum Figur 2) einen rechteckigem, vorzugsweise quadratischen, oder (nicht extra dargestellt) einen runden, vorzugsweise kreisrunden, Querschnitt aufweist. Wie ersichtlich, sind die besagten Strukturelemente dabei insgesamt vorzugsweise als Rohr ausgebildet.

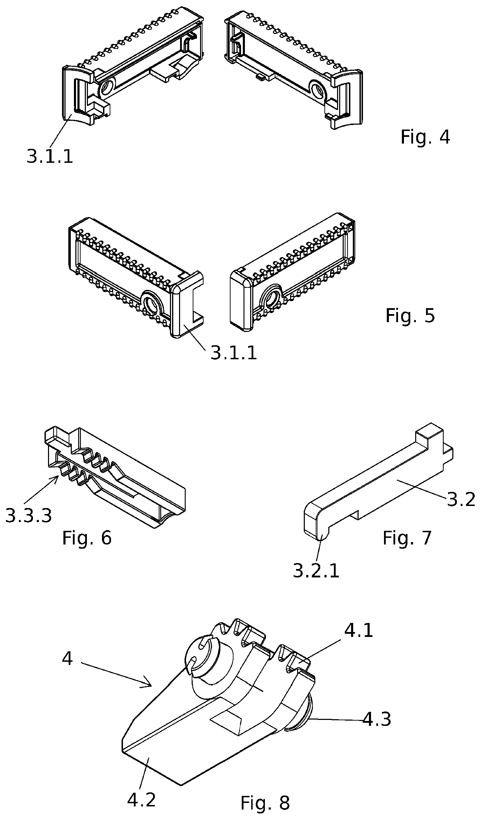

Weiterhin ist bevorzugt vorgesehen, dass der Korpus 3.1 wahlweise aus Kunststoff gebildet und/oder zum Einstecken in das erste Strukturelement 1 zapfenförmig ausgebildet ist. Ferner ist bevorzugt vorgesehen, dass wahlweise die Strukturelemente 1, 2, der Riegel 3.2, die Sicherungseinrichtung 3.3 und/oder das Stellelement 4 aus Metall gebildet sind bzw. ist. Außerdem ist, mit Verweis auf die Figuren 4 und 5, bevorzugt vorgesehen, dass der Korpus 3.1 aus zwei Schalen gebildet ist. Wie insbesondere aus Figur 1 ersichtlich, ist weiterhin bevorzugt vorgesehen, dass der Korpus 3.1 und das Strukturelement 1, vorzugsweise mittels einer Rastnase 3.1.2, verrastbar miteinander verbunden ausgebildet sind.

Ferner ist vorgesehen, dass am Korpus 3.1 eine in die Öffnung 2.1 einbringbare und dadurch den Riegel 3.2 in der Öffnung 2.1 fixierende Sicherungseinrichtung 3.3 vorgesehen ist.

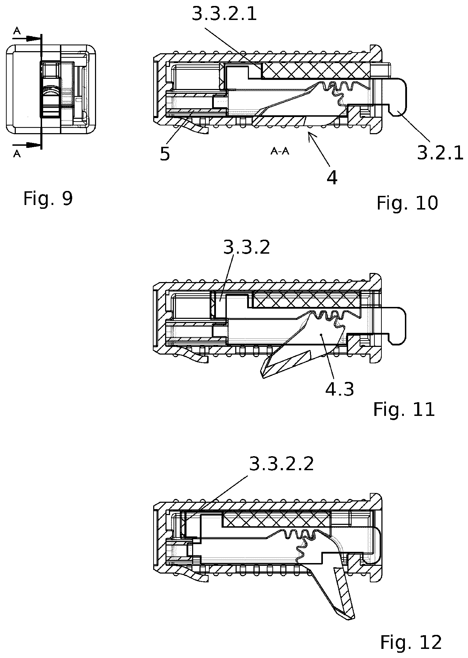

Noch etwas genauer betrachtet, ist dabei besonders bevorzugt vorgesehen, dass der Riegel 3.2 an seinem der Öffnung 2.1 zugewandten Ende einen (bei nicht betätigter Sicherungseinrichtung 3.3) durch die Öffnung 2.1 hindurchstreckbar ausgebildeten Widerhaken 3.2.1 aufweist. Außerdem ist bevorzugt vorgesehen, dass der Riegel 3.2 einschließlich Widerhaken 3.2.1 (bei Bedarf) vollständig in den Korpus 3.1 einschiebbar ausgebildet ist (siehe hierzu auch Figur 12).

Ferner ist insbesondere mit Verweis auf Figur 1 bevorzugt vorgesehen, dass die Sicherungseinrichtung 3.3 bei miteinander verbundenen Strukturelementen 1, 2 einen mit der Öffnung 2.1 zusammenwirkenden Sicherungsabschnitt 3.3.1 aufweist. Befindet sich dieser, wie in Figur 1 dargestellt, in der Öffnung 2.1, kann der besagte Widerhaken 3.2.1 bzw. der Riegel 3.2 nicht mehr aus der Öffnung 2.1 entfernt werden. In anderen Worten ausgedrückt: Es ist bevorzugt vorgesehen, dass der Riegel 3.2 mit einem zum Widerhaken 3.2.1 benachbarten, schmaleren Abschnitt zusammen mit dem Sicherungsabschnitt 3.3.1 die Öffnung 2.1 ausfüllend und damit ein Herausziehen des Widerhakens 3.2.1 aus der Öffnung 2.1 verhindernd ausgebildet ist.

Zur gezielten Koordination der Bewegungen innerhalb der Verbindungseinrichtung 3 ist ferner, wiederum mit Verweis insbesondere auf Figur 1, bevorzugt vorgesehen, dass am Riegel 3.2 ein Mitnehmer 3.2.2 und an der Sicherungseinrichtung 3.3 eine den Mitnehmer 3.2.2 mit Spiel aufnehmende Ausnehmung 3.3.2 mit beidseitigen Anschlägen 3.3.2.1, 3.3.2.2 (siehe Figur 10 und 12) für den Mitnehmer 3.2.2 ausgebildet ist. Dabei ist weiterhin bevorzugt vorgesehen, dass wahlweise der Riegel 3.2 und/ oder die Sicherungseinrichtung 3.3 verschieblich innerhalb des Korpus 3.1 gelagert sind bzw. ist (in den gezeigten Ausführungsbeispielen ist die "und"-Option dargestellt).

Wie sich insbesondere aus der Zusammenschau der Figuren 6 und 7 ergibt, ist ferner zur Realisierung einer guten Führung erfindungsgemäß vorgesehen, dass die Sicherungseinrichtung 3.3 den Riegel 3.2 teilweise umschließend ausgebildet ist.

Dabei ist ferner (siehe insbesondere Figur 6) bevorzugt vorgesehen, dass die Sicherungseinrichtung 3.3 eine zahnstangenartige Verzahnung 3.3.3 aufweist. Außerdem ist (insbesondere mit Verweis auf Figur 8) besonders bevorzugt vorgesehen, dass am Korpus 3.1 ein Stellelement 4 mit einer zahnradartigen Verzahnung 4.1 drehbar gelagert ist. Ferner ist bevorzugt vorgesehen, dass das Stellelement 4 einen Betätigungshebel 4.2 und eine zwischen dem Betätigungshebel 4.2 und der zahnradartigen Verzahnung 4.1 angeordnete, am Korpus 3.1 gelagerte Drehachse 4.3 aufweist. Um bei alledem die Sicherungseinrichtung 3.3 und damit auch den Riegel 3.2 gemeinsam von außerhalb des Strukturelements 1 gezielt betätigen zu können, ist darüber hinaus bevorzugt vorgesehen, dass die zahnstangenartige und die zahnradartige Verzahnung 3.3.3, 4.1 zusammenwirkend ausgebildet sind. Außerdem weist das erste Strukturelement 1 an der entsprechenden Stelle eine passende Öffnung für den Betätigungshebel 4.2 auf.

Wie insbesondere aus den Figuren 10 bis 12 ersichtlich, ist dabei weiterhin vorgesehen, dass wahlweise der Riegel 3.2, die Sicherungseinrichtung 3.3 und/oder das Stellelement 4 zwischen den beiden Schalen angeordnet sind bzw. ist (in den gezeigten Ausführungsbeispielen ist die "und"-Option dargestellt).

Zur Bewegungsunterstützung ist außerdem (siehe hierzu wieder insbesondere Figur 1) bevorzugt vorgesehen, dass zwischen dem Korpus 1 und dem Riegel 3.2 ein Federelement 5 (vorzugsweise eine Schraubenfeder) vorgesehen und dieses zum Herausdrücken des Riegels 3.2 aus dem Korpus 1 ausgebildet ist.

Wie besonders gut aus den Figuren 4 und 5 ersichtlich, ist bevorzugt an einem aus dem ersten Strukturelement 1 heraus stehenden Abschnitt des Korpus 3.1 eine Anlagefläche 3.1.1 für das zweite Strukturelement 2 vorgesehen. Je nach Ausbildung des zweiten Strukturelements 2 ist dabei schließlich bevorzugt vorgesehen, dass die Anlagefläche 3.1.1 entweder (siehe hierzu Figur 5) bei rechteckigem Querschnitt des zweiten Strukturelements 2 eben oder (siehe hierzu Figur 4) bei rundem Querschnitt des zweiten Strukturelements 2 entsprechend gewölbt ausgebildet ist.

Die erfindungsgemäße Strukturanordnung funktioniert wie folgt:
Ausgangspunkt der Betrachtung ist Figur 10. Der besseren Übersichtlichkeit halber sind dort die beiden Strukturelemente 1, 2 nicht extra dargestellt. Wie in Figur 1 befindet sich aber einerseits der Riegel 3.2 und andererseits die Sicherungseinrichtung 3.3 in der (nicht dargestellten) Öffnung 2.1, d. h. die beiden Strukturelemente 1, 2 sind fest miteinander verbunden.

Zum Lösen der Verbindung wird nun das Stellelement 4 über den Betätigungshebel 4.2 und die besagte Verzahnung bewegt. Dieser Schritt ist gut in Figur 11 erkennbar, wobei dort auch gut zu erkennen ist, dass die Bewegung des Stellelements 4 dazu führt, dass die Sicherungseinrichtung 3.3 bzw. der Sicherungsabschnitt 3.3.1 aus der Öffnung 2.1 herausgezogen wird, was unmittelbar zur Folge hat, dass nunmehr auch der Riegel 3.2 innerhalb der Öffnung 2.1 (typischerweise nach oben) verschoben und aus der Öffnung 2.1 herausgenommen werden kann. Damit können dann die Strukturelement 1, 2 voneinander entfernt werden.

In Figur 12 ist dann noch eine besonders gut für die Montage der Strukturanordnung geeignete Stellposition gezeigt, bei der sich der Riegel 3.2 wegen der Wirkung des Anschlags 3.3.2.1 und gegen den Druck der Feder 5 vollständig im Korpus 3.1 befindet.

Der Zusammenbau einer Strukturanordnung funktioniert entsprechend in umgekehrter Reihenfolge, und zwar, mit der in Figur 10 dargestellten Endstellung, diesmal entsprechend unter Beteiligung des Anschlags 3.3.2.2.

### Bezugszeichenliste

- 1: erstes Strukturelement
- 2: zweites Strukturelement
- 2.1: Öffnung
- 3: Verbindungseinrichtung
- 3.1: Korpus
- 3.1.1: Anlagefläche
- 3.1.2: Rastnase
- 3.2: Riegel
- 3.2.1: Widerhaken
- 3.2.2: Mitnehmer
- 3.3: Sicherungseinrichtung
- 3.3.1: Sicherungsabschnitt
- 3.3.2: Ausnehmung
- 3.3.2.1: Anschlag
- 3.3.2.2: Anschlag
- 3.3.3: zahnstangenartige Verzahnung
- 4: Stellelement
- 4.2: zahnradartigen Verzahnung
- 4.1: Betätigungshebel
- 4.3: Drehachse
- 5: Federelement

## Patentansprüche

1. Strukturanordnung, umfassend ein erstes und ein zweites Strukturelement (1, 2) und eine Verbindungseinrichtung (3) zum Verbinden der beiden Strukturelemente (1, 2), wobei die Verbindungseinrichtung (3) einen im ersten Strukturelement (1) fixierten Korpus (3.1) und einen formschlüssig mit einer Öffnung (2.1) am zweiten Strukturelement (2) zusammenwirkenden Riegel (3.2) aufweist, wobei am Korpus (3.1) eine in die Öffnung (2.1) einbringbare und dadurch den Riegel (3.2) in der Öffnung (2.1) fixierende Sicherungseinrichtung (3.3) vorgesehen ist,
**dadurch gekennzeichnet,**
**dass** die Sicherungseinrichtung (3.3) als Führung den Riegel (3.2) teilweise umschließend ausgebildet ist.

2. Strukturanordnung nach Anspruch 1,
**dadurch gekennzeichnet,**
**dass** der Riegel (3.2) an seinem der Öffnung (2.1) zugewandten Ende einen durch die Öffnung (2.1) hindurchstreckbarausgebildeten Widerhaken (3.2.1) aufweist.

3. Strukturanordnung nach einem der Ansprüche 1 oder 2,
**dadurch gekennzeichnet,**
**dass** die Sicherungseinrichtung (3.3) bei miteinander verbundenen Strukturelementen (1, 2) einen mit der Öffnung (2.1) zusammenwirkenden Sicherungsabschnitt (3.3.1) aufweist.

4. Strukturanordnung nach 2 und 3,
**dadurch gekennzeichnet,**
**dass** der Riegel (3.2) mit einem zum Widerhaken (3.2.1) benachbarten, schmaleren Abschnitt zusammen mit dem Sicherungsabschnitt (3.3.1) die Öffnung (2.1) ausfüllend und damit ein Herausziehen des Widerhakens (3.2.1) verhindernd ausgebildet ist.

5. Strukturanordnung nach einem der Ansprüche 1 bis 4,
**dadurch gekennzeichnet,**
**dass** am Riegel (3.2) ein Mitnehmer (3.2.2) und an der Sicherungseinrichtung (3.3) eine den Mitnehmer (3.2.2) mit Spiel aufnehmende Ausnehmung (3.3.2) mit beidseitigen Anschlägen (3.3.2.1, 3.3.2.2) ausgebildet ist.

6. Strukturanordnung nach einem der Ansprüche 1 bis 5,
**dadurch gekennzeichnet,**
**dass** wahlweise der Riegel (3.2) und/oder die Sicherungseinrichtung (3.3) verschieblich innerhalb des Korpus (3.1) gelagert sind bzw. ist.

7. Strukturanordnung nach einem der Ansprüche 1 bis 6,
**dadurch gekennzeichnet,**
**dass** die Sicherungseinrichtung (3.3) eine zahnstangenartige Verzahnung (3.3.3) aufweist.

8. Strukturanordnung nach einem der Ansprüche 1 bis 7,
**dadurch gekennzeichnet,**
**dass** am Korpus (3.1) ein Stellelement (4) mit einer zahnradartigen Verzahnung (4.1) drehbar gelagert ist.

9. Strukturanordnung nach Anspruch 8,
**dadurch gekennzeichnet,**
**dass** das Stellelement (4) einen Betätigungshebel (4.2) und eine zwischen dem Betätigungshebel (4.2) und der zahnradartigen Verzahnung (4.1) angeordnete, am Korpus (3.1) gelagerte Drehachse (4.3) aufweist.

10. Strukturanordnung nach Anspruch 7 oder 8,
**dadurch gekennzeichnet,**
**dass** die zahnstangenartige und die zahnradartige Verzahnung (3.3.3, 4.1) zusammenwirkend ausgebildet sind.

11. Strukturanordnung nach einem der Ansprüche 1 bis 10,
**dadurch gekennzeichnet,**
**dass** an einem aus dem ersten Strukturelement (1) heraus stehenden Abschnitt des Korpus (3.1) eine Anlagefläche (3.1.1) für das zweite Strukturelement (2) vorgesehen ist.

12. Strukturanordnung nach einem der Ansprüche 1 bis 11,
**dadurch gekennzeichnet,**
**dass** zwischen dem Korpus (1) und dem Riegel (3.2) ein Federelement (5) vorgesehen und dieses zum Herausdrücken des Riegels (3.2) aus dem Korpus (1) ausgebildet ist.

## Claims

1. A structural arrangement, comprising a first and a second structural element (1, 2) and a connecting device (3) for connecting the two structural elements (1, 2), wherein connecting device (3) has a body (3.1) fixed in the first structural element (1) and a bolt (3.2) interacting in a form-fit manner with an opening (2.1) in the second structural element (2), wherein a safety device (3.3) which can be introduced into the opening (2.1) and thus fixes the bolt (3.2) in the opening (2.1) is provided on the body (3.1),
**characterised in that**
the safety device (3.3) is designed as a guide partially enclosing the bolt (3.2).

2. The structural arrangement according to claim 1,
**characterised in that**
the bolt (3.2) at its end facing the opening (2.1) has a barb (3.2.1) designed to be pushed through the opening (2.1).

3. The structural arrangement according to any one of claims 1 or 2,
**characterised in that**
the safety device (3.3) has a safety section (3.3.1) interacting with the opening (2.1) when the structural elements (1, 2) are connected together.

4. The structural arrangement according to claim 2 and 3,
**characterised in that**
the bolt (3.2) with a narrower section adjacent to the barb (3.2.1) together with safety section (3.3.1) is designed to fill the opening (2.1) and thus to prevent the barb (3.2.1) from being pulled out.

5. The structural arrangement according to any one of claims 1 to 4,
**characterised in that**
a driver (3.2.2) is formed on the bolt (3.2) and a recess (3.3.2) with stops (3.3.2.1, 3.3.2.2) on both sides, which accommodates the driver (3.2.2) with play, is formed on the safety device (3.3).

6. The structural arrangement according to any one of claims 1 to 5,
**characterised in that**
optionally the bolt (3.2) and/or the safety device (3.3) is or are mounted displaceably inside the body (3.1).

7. The structural arrangement according to any one of claims 1 to 6,
**characterised in that**
the safety device (3.3) has a rack-and-pinion-type gearing (3.3.3).

8. The structural element according to any one of claims 1 to 7,
**characterised in that**
an actuator (4) with a gearwheel-type gearing (4.1) is mounted rotatably on the body (3.1).

9. The structural arrangement according to claim 8,
**characterised in that**
the actuator (4) has an operating lever (4.2) and a pivot (4.3) which is mounted on the body (3.1) arranged between the operating lever (4.2) and the gearwheel-type gearing (4.1).

10. The structural arrangement according to claim 7 or 8,
**characterised in that**
the rack-and-pinion-type and cogwheel-type gearing (3.3.3, 4.1) are designed to cooperate.

11. The structural arrangement according to any one of claims 1 to 10,
**characterised in that**
the bearing surface (3.1.1) for the second structural element (2) is provided on the section of the body (3.1) projecting from the first structural element (1).

12. The structural arrangement according to any one of claims 1 to 11,
**characterised in that**
a spring element (5) is provided between the body (1) and the bolt (3.2) and that the former is designed for pushing the bolt (3.2) out of the body (1).

## Revendications

1. Ensemble structurel, comprenant un premier et un deuxième élément de structure (1, 2) et un dispositif d'assemblage (3), destiné à assembler les deux éléments de structure (1, 2), le dispositif d'assemblage (3) comportant un corps (3.1) fixé dans le premier élément de structure (1) et un verrou (3.2) coopérant par complémentarité de forme avec un orifice (2.1) sur le deuxième élément de structure (2), sur le corps (3.1) étant prévu un dispositif de sécurité (3.3) susceptible d'être introduit dans l'orifice (2.1) et fixant ainsi le verrou (3.2) dans l'orifice (2.1),
**caractérisé**
**en ce que** le dispositif de sécurité (3.3) est conçu sous la forme d'un guidage entourant partiellement le verrou (3.2).

2. Ensemble structurel selon la revendication 1,
**caractérisé**
**en ce que** sur son extrémité qui fait face à l'orifice (2.1), le verrou (3.2) comporte un barbillon (3.2.1), conçu pour pouvoir traverser l'orifice (2.1).

3. Ensemble structurel selon la revendication 1 ou 2,
**caractérisé**
**en ce que** lorsque les éléments de structure (1, 2) sont assemblés l'un avec l'autre, le dispositif de sécurité (3.3) comporte un segment de sécurité (3.3.1) coopérant avec l'orifice (2.1)

4. Ensemble structurel selon l'une quelconque des revendications 2 et 3,
**caractérisé**
**en ce que** par un segment plus étroit, voisin du barbillon (3.2.1), le verrou (3.2) est conçu de sorte à remplir l'orifice (2.1), conjointement avec le segment de sécurité (3.3.1) et à empêcher ainsi un retrait du barbillon (3.2.1).

5. Ensemble structurel selon l'une quelconque des revendications 1 à 4,
**caractérisé**
**en ce que** sur le verrou (3.2) est conçu un entraîneur (3.2.2) et sur le dispositif de sécurité (3.3) est conçu un évidement (3.3.2) recevant l'entraîneur (3.2.2) avec un jeu, doté de butées (3.3.2.1, 3.3.2.2) bilatérales.

6. Ensemble structurel selon l'une quelconque des revendications 1 à 5,
**caractérisé**
**en ce que** sélectivement le verrou (3.2) et / ou le dispositif de sécurité (3.3) sont ou est logé(s) de manière déplaçable à l'intérieur du corps (3.1).

7. Ensemble structurel selon l'une quelconque des revendications 1 à 6,
**caractérisé**
**en ce que** le dispositif de sécurité (3.3) comporte une denture (3.3.3) de type crémaillère.

8. Ensemble structurel selon l'une quelconque des revendications 1 à 7,
**caractérisé**
**en ce qu'**un élément de commande (4) doté d'une denture (4.1) de type roue dentée est logé de manière rotative sur le corps (3.1).

9. Ensemble structurel selon la revendication 8,
**caractérisé,**
**en ce que** l'élément de commande (4) comporte un levier d'actionnement (4.2) et un axe de rotation (4.3), placé entre le levier d'actionnement (4.2) et la denture (4.1) de type roue dentée, logé sur le corps (3.1).

10. Ensemble structurel selon la revendication 7 ou 8,
**caractérisé,**
**en ce que** la denture (3.3.3, 4.1) de type crémaillère et de type roue dentée sont conçues de sorte à coopérer.

11. Ensemble structurel selon l'une quelconque des revendications 1 à 10,
**caractérisé**
**en ce que** sur une section du corps (3.1) débordant hors du premier élément de structure (1) est prévue une surface d'appui (3.1.1) pour le deuxième élément de structure (2).

12. Ensemble structurel selon l'une quelconque des revendications 1 à 11,
**caractérisé**
**en ce qu'**entre le corps (1) et le verrou (3.2) est prévu un élément à ressort (5) et celui-ci est conçu pour pousser le verrou (3.2) hors du corps (1).
